# EUROPÄISCHE PATENTANMELDUNG

(11) **EP 1 602 521 A1**
(43) Veröffentlichungstag der Anmeldung: **07.12.2005**
(21) Anmeldenummer: 05104542.5
(22) Anmeldetag: 27.05.2005
(51) Int. Cl.: B60K 37/06, B60R 11/02

(54) **Fahrerinformationssystem mit drehbarer Bedienelementleiste**

(30) Priorität: 02.06.2004 DE 102004027037
(71) Anmelder: Robert Bosch GmbH, 70442 Stuttgart (DE)
(72) Erfinder: Zuehlsdorff, Sven, 30171, Hannover (DE)

(57) **Zusammenfassung**

Vorgeschlagen wird ein Fahrerinformationssystem mit einer Frontkappe, welche die Frontansicht des Fahrerinformationssystems bildet,
wobei ein Teil der Frontkappe durch eine drehbar gelagerte Bedienelementleiste gebildet ist, welche Bedienelementleiste Bedienelemente zur Bedienung des Fahrerinformationssystems aufweist,
wobei die Bedienelementleiste mindestens zwei Gruppen von Bedienelementen aufweist,
wobei die Bedienelementleiste in mindestens zwei Rastpositionen drehbar ist, und
wobei in mindestens zwei der mindestens zwei Rastpositionen jeweils eine der Bedienelementgruppen Teil der Frontansicht des Fahrerinformationssystems ist.

Die Erfindung mit den Merkmalen des unabhängigen Patentanspruchs hat den Vorteil, dass die Zahl der auf der Frontkappe eines erfindungsgemäßen Fahrerinformationssystems sichtbaren Bedienelemente bei gleich bleibendem Funktionsumfang des Geräts nennenswert verkleinert werden kann.

## Beschreibung

### Stand der Technik

Die Erfindung geht von einem Fahrerinformationssystem mit einer drehbaren Bedienelementleiste nach der Gattung des unabhängigen Patentanspruchs aus.

Aus dem Prospekt Fa. Blaupunkt "Der Pluspunkt im Auto. Mobile Kommunikation 1999.", Seiten 16 und 22 sind Autoradiogeräte bekannt, bei denen eine die Frontansicht des Geräts bildende und Bedienelemente umfassende Frontkappe aus einer Bedienposition heraus als Ganzes verschwenkbar angeordnet ist, um einen Zugriff auf einen hinter der Frontkappe angeordneten Compact-Cassetten- oder einen Compact-Disc-Schacht freizugeben.

Aus dem Prospekt Fa. Sony "in car 2002", Seite 26, ist ein Autoradiogerät bekannt, bei dem eine die Bedienelemente umfassende Frontkappe des Geräts als Ganzes um 180 Grad verdrehbar angeordnet ist, so dass in einer ersten Ansicht lediglich ein fast die ganze Fronkappe einnehmendes Display, in der um 180 Grad gedrehten Position der Frontkappe hingegen ein vergleichsweise kleines Display und zusätzlich die Bedienelemente des Geräts sichtbar sind.

Aus dem Prospekt Fa. Kenwood "2001 - 2002 Car Entertainment System", Seite 14, ist ein Autoradiogerät mit einer sogenannten "D-Mask"-Funktion bekannt welche es ermöglicht, die die Bedienelemente und ein Display des Geräts umfassende Frontkappe um ihre Längsachse um 180 Grad zu verdrehen, so dass in einer ersten Rastposition der Frontkappe Bedienelemente und Display sichtbar sind, während in der um 180 Grad verdrehten Rastposition lediglich eine neutrale schwarze Blende zu sehen ist.

Von den vorgenannten Autoradiogeräten der Fa. Blaupunkt ist weiterhin ein sogenannten "Softkey-Konzept" bekannt, bei welchem in Abhängigkeit eines Betriebszustandes des Geräts neben dem Display angeordneten Bedienknöpfen verschiedene Funktionen zugeordnet sind, wobei eine Funktionsbeschreibung den Bedienelementen räumlich zugeordnet auf dem Display angezeigt wird.

Autoradiogeräte werden in Regel in einem genormten Einbauschacht in einer Mittelkonsole oder in einem Armaturenbrett von Kraftfahrzeugen installiert. Wegen der daraus resultierenden in der Regel beengten Platzverhältnisse auf der Frontkappe und des gleichzeitig hohen Funktionsumfangs der Geräte sowie des Wunsches nach einem möglichst großen Display steht für die Bedienelemente vergleichsweise wenig Raum zur Verfügung. Daraus ergibt sich das Problem, entweder eine Vielzahl entsprechend kleiner Bedienelemente oder eine geringere Anzahl, dann aber für verschiedene Funktionen doppelt belegter Bedienelemente vorzusehen.

### Vorteile der Erfindung

Die Erfindung mit den Merkmalen des unabhängigen Patentanspruchs hat den Vorteil, dass die Zahl der auf der Frontkappe eines erfindungsgemäßen Fahrerinformationssystems sichtbaren Bedienelemente bei gleich bleibendem Funktionsumfang des Geräts nennenswert verkleinert werden kann.

Dadurch ergibt sich eine aufgeräumte und damit übersichtlich gestaltete Frontansicht des Fahrerinformationssystems, welches dem Bediener eine Orientierung und damit Bedienung des Geräts erheblich erleichtert. Weiter ist es möglich, die Bedienelemente in ausreichender Größe zu realisieren, um eine ergonomische Bedienung des Geräts zu gewährleisten. Schließlich können in vorteilhafter Weise die Bedienelemente auch in ihrer konkreten Ausgestaltung an eine aktuelle Funktion des Geräts angepasst werden. Durch die mit der Erfmdung ermöglichte Reduktion der sichtbaren Bedienelemente hinterlässt das Gerät optisch einen besonders aufgeräumten Eindruck, was insbesondere beim Einbau des Geräts in einer mit Bedienelementen für beispielsweise Klimaanlage u.a. ohnehin gewöhnlich überfrachteten Mittelkonsole eines Kraftfahrzeugs von Bedeutung ist.

Von besonderem Vorteil ist es weiterhin, wenn die Bedienelementleiste in einer Rastposition verschwenkbar ist, in der keine oder eine deutlich reduzierte Zahl von Bedienelementen sichtbar sind, da häufig die Bedienelemente von durch den Endverbraucher in einem Kraftfahrzeug nachgerüsteten Autoradio- oder Fahrzeugnavigationsgeräten in ihrer Anmutung nicht zu den Bedien- und/oder Gestaltungselementen des Fahrzeugs passen. Hier trägt die Erfindung zu einer verbesserten Gesamtästhetik bei.

### Zeichnungen

Ausführungsbeispiele der Erfindung sind in den Figuren dargestellt und werden nachfolgend näher erläutert. Gleiche Bezugszeichen in den Figuren bezeichnen dabei gleiche Elemente.

### Es zeigen

Figur 1A eine erste Frontansicht des erfmdungsgemäßen Fahrerinformationssystems 1 mit der drehbaren Bedienelementleiste 5 in einer ersten Rastposition,
Figur 1B einen Schnitt durch die erste Frontansicht gemäß Figur 1A,
Figur 1C einen vergrößerten Ausschnitt des erfindungswesentlichen Teils des Schnitts gemäß Figur 1B,
Figur 2A eine zweite Frontansicht des erfmdungsgemäßen Fahrerinformationssystems 1 mit der drehbaren Bedienelementleiste 5 in einer zweiten Rastposition,
Figur 2B einen vergrößerten Ausschnitt des erfindungswesentlichen Teils eines Schnitts durch die zweite Frontansicht des erfindungsgemäßen Fahrerinformationssystems 1 gemäß Figur 1A,
Figur 3A eine dritte Frontansicht des erfindungsgemäßen Fahrerinformationssystems 1 mit der drehbaren Bedienelementleiste 5 in einer dritten Rastposition,
Figur 3B einen vergrößerten Ausschnitt des erfmdungswesentlichen Teils eines Schnitts durch die dritte Frontansicht des erfindungsgemäßen Fahrerinformationssystems 1 gemäß Figur 1A,
Figur 4 einen Schnitt durch eine alternative Bedienelementleiste 5' und
Figur 5 einen Schnitt durch eine weitere alternative Bedienleiste 5".

### Beschreibung der Ausführungsbeispiele

Figur 1A zeigt eine erste Frontansicht des erfmdungsgemäßen Fahrerinformationssystems 1, wie sie sich aus Sicht des Benutzers nach Einbau des Fahrerinformationssystems 1 in eine Mittelkonsole eines Kraftfahrzeugs oder in dessen Armaturenbrett darstellt. Im vorliegenden Fall handelt es sich bei dem erfmdungsgemäßen Fahrerinformationssystem zum Beispiel um ein integriertes Gerät umfassend die Funktionen eines Autoradios und eines Navigationssystems. Dies bedeutet jedoch keine Einschränkung der Erfindung auf diesen Gerätetypus.

Das Fahrerinformationssystem 1 umfasst einen Rahmen 2 und eine Frontkappe 3. Die Frontkappe 3 weist ein Display 4 und Bedienelemente 6, beispielhaft hier einen Geräteschalter 62, einen Lautstärkeregelknopf 61 und einen Quellenwahl- und/oder Funktionsumschalter 63, auf. Das Display 4 und die Bedienelemente 61, 62 und 63 sind dabei Bestandteile eines ersten Teils 30 der Frontkappe 3. Dieser erste Teil 30 der Frontkappe 3 ist dabei entweder feststehend ausgebildet, oder aber, wie im vorliegenden Fall abklappbar, um einen Zugriff auf einen hinter dem ersten Frontkappenteil 30 liegenden Laufwerksschacht eines Compact-Cassetten-, Compact-Disc- oder ähnlichen Laufwerks, freizugeben.

Erfindungsgemäß umfasst die Frontkappe 3 einen zweiten Teil 5, der im vorliegenden Fall etwa das untere Viertel der Frontkappe 3 umfasst.

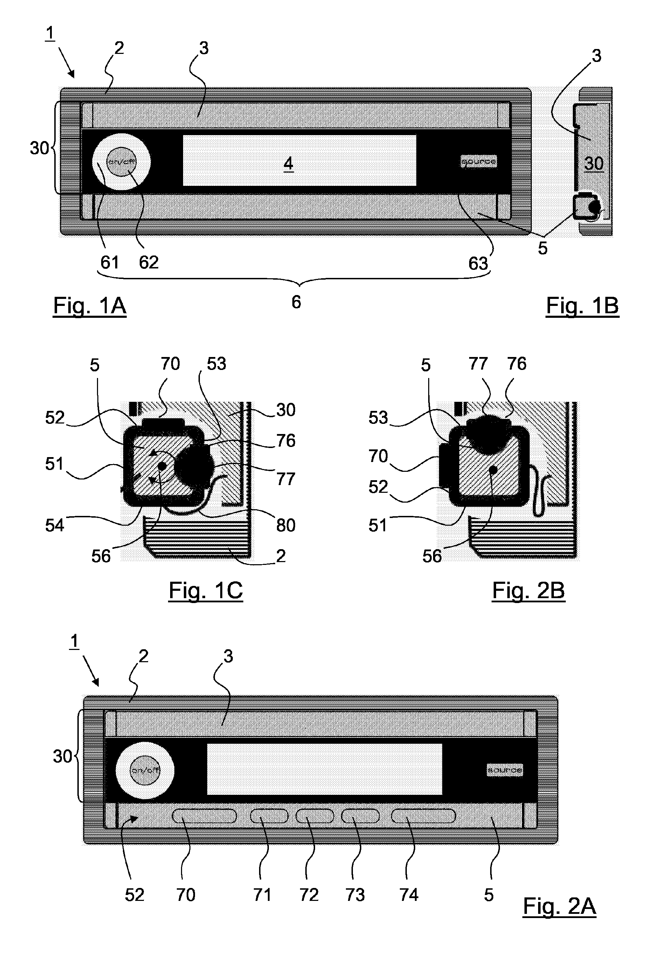

Ein Schnitt durch den Frontkappenbereich des Fahrerinformationssystems 1 ist in Figur 1B dargestellt, Figur 1C zeigt einen vergrößerten Ausschnitt des erfindungswesentlichen Teils der Frontkappe 3.

Der zweite Teil der Frontkappe 3 des Fahrerinformationssystems 1 ist in Form einer Bedienelementleiste 5 von hier zumindest annähernd quadratischem Querschnitt ausgeführt. Diese Bedienelementleiste 5 ist um eine Längsachse 56 drehbar in der Frontkappe 3 gelagert, so dass durch Verdrehen der Bedienelementleiste 5 um jeweils 90 Grad eine erste Seitenfläche 51, der Bedienelementleiste 5, eine zweite Seitenfläche 52 oder ein dritte Seitenfläche 53 sichtbarer Teil der Frontkappe 3 wird.

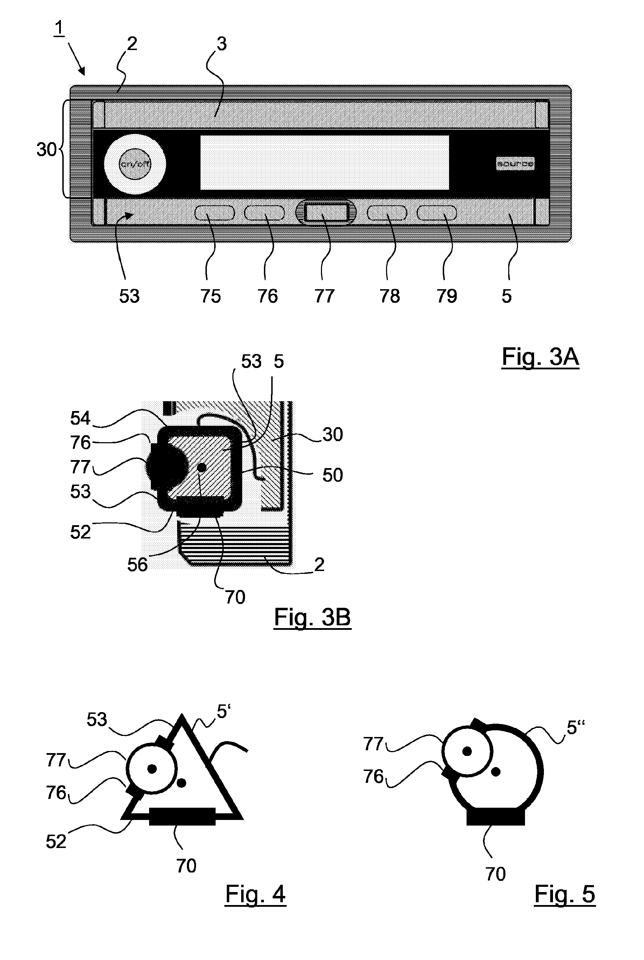

Die erste Seitenfläche 51 der Bedienelementleiste 5 umfasst keinerlei weitere Bedienelemente, die zweite Seitenfläche 52 erste weitere Bedienelemente 70, 71, 72, 73, und 74 (Figur 2A) und die dritte Seitenfläche 53 zweite weitere Bedienelemente 75, 76, 77, 78 und 79 (Figur 3A). Die vierte Seitenfläche 54 der Bedienelementleiste 5 weist wiederum keine Bedienelemente auf, vielmehr befmdet sich an dieser eine Kommunikationsschnittstelle zum Abfragen der weiteren Bedienelemente 70 bis 79 bzw. zum Übertragen durch deren Betätigung erzeugter Signale an den ersten Teil 30 der Frontkappe 30. Diese Schnittstelle ist im vorliegenden Fall in Form eines biegsamen Flachbandkabels 80 ausgebildet.

Im Falle der Figuren 1A, 1B und 1C ist die erste Seitenfläche 51 sichtbarer Bestandteil der Frontkappe 3. Da die erste Seitenfläche 51der Bedienelementleiste 5 im vorliegenden Fall keine weiteren Bedienelemente umfasst, präsentiert sich das Fahrerinformationssystem 1 dem Benutzer in diesem Fall nur mit den vorgenannten Bedienelementen 6. Diese Ansicht ist beispielsweise bei ausgeschaltetem Fahrerinformationssystem 1 zu sehen.

Nach dem Einschalten des Fahrerinformationssystems 1 dreht eine Gerätesteuerung die Bedienelementleiste 5 aus ihrer ersten in Figuren 1A bis 1C dargestellten Rastposition, die hier die Ruheposition der Geräts 1 ist, in eine zweite Rastposition, die in Figuren 2A und 2B dargestellt ist. Der Antrieb der Bedienelementleiste 5 erfolgt dabei ohne Beschränkung der Allgemeinheit elektromotorisch.

Die zweite Rastposition ist beispielsweise dem Betriebsmodus Radio- und CD-Wiedergabe zugeordnet. In dieser zweiten Rastposition der Bedienelementleiste 5 bildet die zweite Seitenfläche 52 der Bedienelementleiste 5 den zweiten Teil der Frontkappe 3 des Fahrerinformationssystems 1. Da die zweite Seitenfläche 52 der Bedienelementleiste 5 erste weitere Bedienelemente 70 bis 74 trägt, sind diese nun für den Benutzer sichtbar und zugänglich. Die erste Seitenfläche 51 ist hingegen durch das Verdrehen der Bedienelementleiste 5 dem Zugriff des Benutzers entzogen und für diesen auch nicht mehr sichtbar.

Die ersten weiteren Bedienelemente 70 bis 74 dienen vorzugsweise ausschließlich zur Bedienung von Autoradio- und CD-Spieler-Funktionen des Fahrerinformationssystems 1 und sind hinsichtlich Zahl und ihrer konkreten Ausführungsform, also beispielsweise Druckknopf, Tasten-Wippe, Drehknopf, Scroll-Rad usw. sowie unter ergonomischen Gesichtspunkten optimal auf diesen Bedien- und Funktionsmodus abgestimmt. Hier können durch Betätigen der Bedienelemente 70 bis 74 beispielsweise ein Titel-Vor- oder Rücksprung auf einer Musik-CD oder ein Titel-Anspiel-Modus (Scan) für alle auf der CD enthaltenen Musik-Stücke ausgelöst werden. Weitere der zweiten weiteren Bedienelemente 70 bis 74 dienen beispielsweise als Stationstasten, also zum Einstellen von Rundfunkprogrammen, deren Empfangsdaten im Gerät gespeichert sind.

Durch Betätigen des Quellenwahl- oder Funktionsumschalters 63 kann vom Autoradio- in den Navigationsmodus des Fahrerinformationssystems 1 gewechselt werden. In diesem Funktionsmodus sind vom Autoradiomodus abweichende Bedienelemente sowohl hinsichtlich Zahl als auch konkreter Ausgestaltung von Vorteil. Daher dreht die Gerätesteuerung die Bedienelementleiste 5 um weitere 90 Grad im Gegenuhrzeigersinn, so dass nun die dritte Seitenfläche 53 der Bedienelementleiste einen Teil der Frontkappe 3 des Fahrerinformationssystems 1 bildet. Die zweite Seitenfläche 52 liegt nun außerhalb des Sicht- und Zugriffsbereichs des Benutzers (Figuren 3A und 3B).

Im Navigationsmodus sind nun die auf der dritten Seitenfläche 53 der Bedienelementleiste 5 angeordneten zweiten weiteren Bedienelemente 75 bis 79 für den Benutzer sichtbar und zugänglich. Diese umfassen neben üblichen Tastschaltern 75, 76, 78 und 79 vorzugsweise auch ein Scroll-Rad bzw. eine Scroll-Walze 77, mit der beispielsweise aus einer Liste von Zielortnamen zum Zwecke einer Zielorteingabe besonders schnell ein passender Ort angewählt werden kann.

Bei einer bevorzugten Ausführungsform der Erfmdung kann es darüber hinaus vorgesehen sein, dass die Bedienelementleiste 5 auch bei Betrieb des Geräts 1 in die in Figuren 1A bis 1C dargestellte Stellung, also erste Seitenfläche 51 ohne weitere Bedienelemente als Teil der Frontkappe 3, verdreht wird. Damit stellt sich die Frontansicht des Fahrerinformationssystems 1 besonders aufgeräumt dar.

Beispielsweise erfolgt bei dem beschriebenen Gerät 1 nach erfolgter Zielorteingabe im Navigationsmodus eine Fahrroutenberechnung vom aktuellen Fahrzeugstandort zum eingegebenen Zielort. Hierbei ist keine weitere Eingabe seitens des Benutzers erforderlich. Auf die Routenberechnung erfolgt während der Fahrt des Fahrzeugs eine Zielführung durch vom Fahrerinformationssystem 1 ausgegeben Fahrrichtungshinweise in Form gesprochener oder auf dem Display 4 angezeigter Anweisungen. Auch hier sind keine weiteren Eingaben durch den Benutzer erforderlich. In diesem Betriebszustand sind demnach keine zweiten weiteren Bedienelemente 75 bis 79 zur Bedienung der Navigationsfunktion erforderlich. Daher kann in diesem Betriebszustand nach der Zielorteingabe die Bedienelementleiste 5 in die in Figur 1A dargestellte Ruhe-Rastposition verdreht werden.

Abweichend vom vorbeschriebenen Ausführungsbeispiel kann vorgesehen sein, dass nach Einschalten des Geräts 1 dieses nicht notwendig in den Autoradio-Modus (Figuren 2A, 2B) übergeht, sondern dass statt dessen in den vor dem letzten Ausschalten zuletzt eingestellten Modus, also alternativ beispielsweise in den Navigationsgeräte-Modus.

Darüber hinaus ist bevorzugt vorgesehen, dass das Fahrerinformationssystem 1 beim Ausschalten stets die erste Rastposition, also die Ruheposition mit erster Seitenfläche 51 der Bedienelementleiste 5 als Teil der Frontkappe 3 einstellt.

Abweichend von bisher beschriebenen Ausführungsbeispielen muss die Bedienelementleiste 5 nicht notwendig einen im wesentlichen quadratischen Querschnitt aufweisen.

So ist wie in Figur 4 dargestellt eine Bedienelementleiste 5' auch mit dreieckigem oder wie in Figur 5 dargestellt eine Bedienelementleiste 5" mit rundem Querschnitt möglich.

Weitere abweichende Geometrien der Bedienelementleiste 5 sind möglich und liegen im Bereich der Erfindung.

## Patentansprüche

1. Fahrerinformationssystem mit einer Frontkappe, welche die Frontansicht des Fahrerinformationssystems bildet,
wobei ein Teil der Frontkappe durch eine drehbar gelagerte Bedienelementleiste gebildet ist, welche Bedienelementleiste Bedienelemente zur Bedienung des Fahrerinformationssystems aufweist,
wobei die Bedienelementleiste mindestens zwei Gruppen von Bedienelementen aufweist,
wobei die Bedienelementleiste in mindestens zwei Rastpositionen drehbar ist, und
wobei in mindestens zwei der mindestens zwei Rastpositionen jeweils eine der Bedienelementgruppen Teil der Frontansicht des Fahrerinformationssystems ist.

2. Fahrerinformationssystem nach Anspruch 1, **dadurch gekennzeichnet, dass** die Bedienelementleiste mindestens drei Oberflächen aufweist, von denen mindestens zwei jeweils eine Bedienelementgruppe aufweisen.

3. Fahrerinformationssystem nach Anspruch 1 oder 2, **dadurch gekennzeichnet, dass** die Bedienelementleiste mindestens eine Oberfläche aufweist, welche keine Bedienelementgruppe aufweist.

4. Fahrerinformationssystem nach einem der vorhergehenden Ansprüche, **dadurch gekennzeichnet, dass** die verschiedenen Rastpositionen der Bedienelementleiste verschiedenen Funktionen des Fahrerinformationssystems zugeordnet sind.

5. Fahrerinformationssystem nach einem der vorhergehenden Ansprüche, **dadurch gekennzeichnet, dass** die Bedienelementleiste motorisch angetrieben ist, und dass eine Steuerung des Fahrerinformationssystems ausgebildet ist, die Bedienelementleiste in Abhängigkeit einer Funktion des Fahrerinformationssystems in eine der verschiedenen Rastpositionen zu verdrehen.
